# EUROPEAN PATENT APPLICATION

(11) **EP 4 821 335 A1**
(43) Date of publication of application: **14.10.2026**
(21) Application number: 26155600.5
(22) Date of filing: 31.01.2026
(51) Int. Cl.: A01B 63/112, B60C 23/00

(54) **AGRICULTURAL MACHINE AND METHOD FOR AVOIDING A MIRED EVENT IN SUCH A MACHINE**

(30) Priority: 07.04.2025 US 202519171463
(71) Applicant: Deere & Company, Moline, IL 61265 (US)
(72) Inventor: Hubner, Cary S., 68163 Mannheim (DE)
(74) Representative: Reichert, Christian

(57) **Abstract**

An agricultural machine (210) is disclosed. The agricultural machines (210) comprising: an agricultural vehicle (204) and an agricultural implement (202); at least one processor (330); and a memory (320) that stores instructions (322) that, when executed by the at least one processor (330), configure the at least one processor (330) to: acquire input data (340) related to the agricultural machine (210) during an agricultural operation; determine, based on the input data, conditions indicative of a potential mired event; and generate a control signal (350) to at least one component of the agricultural machine (210) to mitigate the potential mired event. Furthermore, a method for avoiding a mired event in an agricultural machine (210) is disclosed.

## Description

### BACKGROUND

At time, work vehicles, such as agricultural vehicles may operate in non-ideal conditions. For instance, after long periods of precipitation, an agricultural field may be quite wet. The softer ground expected with such conditions increases a potential of the agricultural vehicle getting stuck in mud. Such events may require intervention and lead to loss productivity.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

In one implementation, a system for an agricultural machine is provided. The system includes at least one processor and a memory that stores instructions. The instructions, when executed by the at least one processor, configure the processor to acquire input data related to the agricultural machine during an agricultural operation; determine, based on the input data, conditions indicative of a potential mired event; and generate a control signal to at least one component of the agricultural machine to mitigate the potential mired event.

In another implementation, a method for avoiding a mired event in an agricultural machine. The method includes acquiring, by at least one processor, input data related to the agricultural machine while performing an agricultural operation. The method also includes detecting, based on the input data, conditions indicative of a potential mired event. In addition, the method includes generating a control signal to a component of the agricultural machine to mitigate the potential mired event when the conditions indicative of the potential mired event are detected. In yet another implementation, a system is provided. The system includes an agricultural vehicle and an agricultural implement coupled to the agricultural vehicle to perform an agricultural operation. The system also includes a controller associated with at least one of the agricultural vehicle or the agricultural implement that receives input data and outputs control signals to control the agricultural machine or the agricultural implement. The controller includes at least one processor and a memory that stores instructions that, when executed by the at least one processor, configure the at least one processor to: identify conditions indicative of a potential mired event based on the input data, wherein the input data includes one or more of a wheel speed of the agricultural vehicle, a wheel speed of the agricultural implement, an externally-indicated speed, a power output of the agricultural vehicle, or image data from a computer vision system; and generate control signals indicative of an action to mitigate the potential mired event, wherein the action includes one or more of changing a tire pressure on the agricultural implement, changing a weight distribution of the agricultural implement with a frame weight distribution system, changing a downforce on row units of the agricultural implement, changing depth of tillage points of the agricultural implement, changing a working position of ground engaging features of the agricultural implement, engage or increase speed of the agricultural implement via an implement propulsion system, or halt all activity and send an alert.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

Various non-limiting embodiments are further described in the detailed description given below with reference to the accompanying drawings, which are incorporated in and constitute a part of the specification.
Fig. 1 illustrates an exemplary, non-limiting implementation of an agricultural machine according to various aspects.
Fig. 2 illustrates a schematic block diagram of an exemplary, non-limiting implementation of an agricultural machine in accordance with one or more aspects.
Fig. 3 illustrates a schematic block diagram of an exemplary, non-limiting implementation of a control system for an agricultural machine according to various aspects.
Fig. 4 illustrates a flow chart of an exemplary, non-limiting implementation for detecting and mitigating a mired event according to various aspects.
Fig. 5 is a schematic diagram of an exemplary, non-limiting implementation of a computing device according to various aspects.

### DETAILED DESCRIPTION

As described above, an agricultural machine can become stuck or mired in an agricultural field during an agricultural operation. The potential for a mired event (e.g. getting stuck or mired in mud) may increase during wetter weather conditions where the ground may be soft. Also, certain agricultural operations using particular agricultural machines may be more susceptible to experiencing a mired event. A mired event can be a problem that requires operator intervention and leads to loss productivity.

Still further, as autonomous control increases in agricultural, mired events can become more costly. In some autonomy scenarios, an operator may not be present to perceive signs of potential for a mired event or take mitigating actions. Further, upon occurrence of the mired event, additional delays may occur while an operator is dispatched to the machine to take corrective action.

Mired events can be an issue for a variety of agricultural machine or agricultural vehicleagricultural implement combinations. With many vehicle-implement combinations, the mired event typically affects a central portion or center frame of the machine. Often, this region is the heaviest part of the machine and, thus, the portion that is more likely to get stuck. In one example, the agricultural machine may include an agricultural vehicle, such as a tractor, and an agricultural implement, such as a planter or seeding machine. Here, the mainframe wheels may be susceptible to getting stuck.

Many vehicle-implement combinations have flexing and/or folding capabilities, and some implements, such as planters, have a feature to transfer weight from a center or mainframe to the wings of the implement. As utilized herein, the weight transfer feature is referred to as a frame weight distribution system. United States Patent Application No. 17/731,643 (published as US 2023/0345859) further describes one implementation of frame weight distribution system and is incorporated by reference herein.

According to an aspect, systems and methods for detecting and mitigating a mired event are described. A control system of the agricultural machine, which may be a vehicle-implement combination, monitors various inputs to detect occurrence of a mired event or a potential for a mired event. For instance, the control system may determine that the mired event is imminent or likely to occur. Accordingly, the control system may detect signs that the mired event may occur prior to the machine getting stuck, to enable the machine to mitigate or avert the mired event. In some situations, the control system may also detect the actual occurrence of the mired event. In these situations, the control system takes action to facilitate getting the machine unstuck.

According to one example, the agricultural machine (which may include an agricultural vehicle and an agricultural implement) detects a wheel slip greater than a predetermined threshold. The wheel slip may suggest conditions indicative of the mired event. In response, the agricultural machine may increase a frame weight distribution (e.g. via a frame weight distribution system) to shift weight from a center frame to the wings. The increase may be to a maximum setting of the frame weight distribution system. In another example, the agricultural machine may change a tire pressure using a central tire inflation system. It is to be appreciated that both a weight transfer and a tire pressure change may be performed.

Stuck detection techniques can include a wheel slip threshold, as described above, as well as various other techniques. The wheel slip threshold may be relative to an agricultural vehicle (e.g. tractor) or may be associated with an agricultural implement (e.g. planter). Still further, measured wheel slip from both the tractor and the planter may be acquired and compared to determine the mired event. In another example, an externally-indicated speed (e.g. via GPS or radar) can be compared to a machine-indicated speed. Discrepancies may be indicative of a mired event. In yet another example, a computer vision system can acquire image data, which is analyzed to determine the mired event. For example, the image data may be of trailing tracks of the machine. Deep ruts or loose conditions may be indicative of a potential for a mired event. In addition to frame weight distribution and tire pressure control, other corrective actions may include raising row cleaners, rolling baskets, or other ground engaging features of the implement. In another example, a downforce on row units or depths of tillage points may be adjusted. United States Patent Application No. 18/056,935 (published as US 2024/0164237) further describes one implementation for adjusting downforce on row units and is incorporated herein by reference. Still further, the implement may include an implement propulsion system, which may be increased or engaged.

As utilized herein, a mired event relates to a situation where a portion of a machine becomes stuck or is becoming stuck or partially impeded on, in or by an obstacle or wet, sticky, soft earth or other substrate.

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

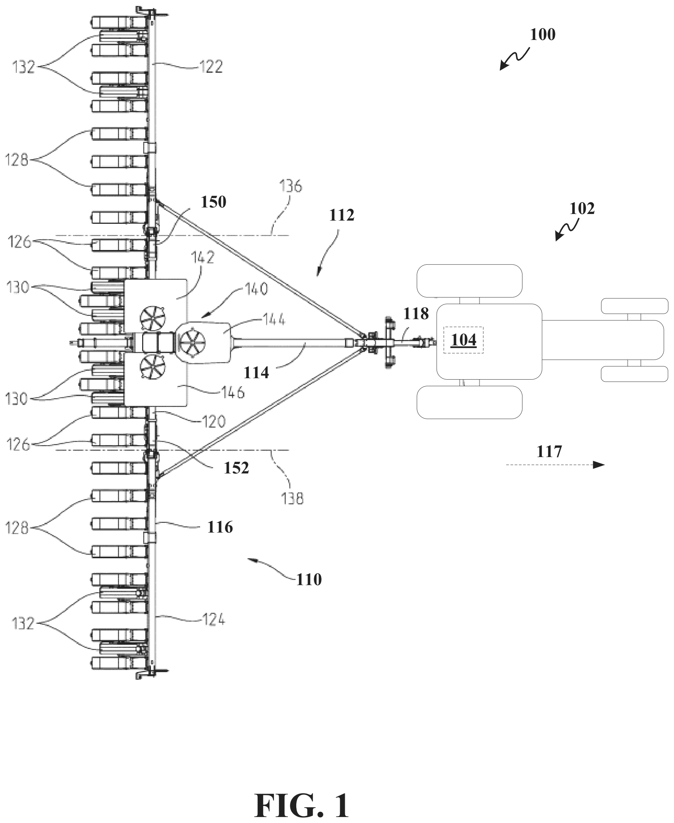

In Fig. 1, an illustrative embodiment of an agricultural machine 100 is shown. Agricultural machine 100 may include an agricultural vehicle 102, such as a tractor, and an agricultural implement 110, such as a row crop planter. The machine 100 is merely exemplary and other agricultural machines and/or other combinations of agricultural vehicles and implements may utilize the detection and mitigation techniques described herein.

The agricultural machine 100, and specifically the agricultural implement 112, is illustrated as including a frame 112 having a draw bar 114 and a tool bar 116 spanning laterally to define a width thereof. At the forward end of the draw bar 114 is a tongue 118 for coupling the frame 102 to a towing vehicle such as the agricultural vehicle 102 (e.g. a tractor). The tool bar 116 is shown as having a center section 120, a first wing section 122, and a second wing section 124. The first and second wing sections 122, 124 extend laterally away from the main section 120 in opposite directions. During operation, the agricultural vehicle 102 may pull the agricultural implement 110 in a forward direction 117, as shown in Fig. 1.

The first and second wing sections 122, 124 may be pivotably coupled to the center section 120 for rotation about fore and aft extending axes 136 and 138. The pivot-type connection allows the wing sections to follow the ground contour as the agricultural machine 100 moves through a field. A first plurality of row units 126 may be coupled to the center section 120 and function as center section ground engaging tools. A second plurality of row units 128 may be coupled to the first and second frame wing sections 122, 124 and form wing section ground engaging tools. According to an aspect, the first and second plurality of row units 126 and 128 may be identical. Thus, it should be appreciated that description of the row units 128 applies equally to the row units 126. Further, description of a single component (e.g., row unit or wheel assembly) should be understood to apply to the corresponding plurality of those components. The agricultural implement 110 may also include a product storage system 140 mounted to the center section 120 of the frame 112. The product storage system 140 may include product bins or tanks, 142, 144 and 146, as shown in Fig. 1, for example. The tanks 142, 144, 146 may hold seed that is delivered pneumatically to mini-hoppers on the row units 126, 128. In other embodiments, the tanks may hold dry or liquid fertilizer or water that is used to dilute a concentrated insecticide or other chemical to be applied. In some embodiments, the agricultural implement 110 may include additional tanks, which may be positioned on the draw bar 114, the center section 120 of the tool bar 116, or the struts extending between the tool bar 116 and the draw bar 114. The additional tanks may include, for example, seed or fertilizer.

Referring still to Fig. 1, the agricultural implement 110 is shown including main wheel assemblies 130 coupled to and supporting the center section 120 of the tool bar 116 for movement over the ground. Moreover, wing wheel assemblies 132 are coupled to the first and second wing sections 122, 124 for supporting the wing sections 122, 124 for movement over the ground. Thus, each of the wheel assemblies 130, 132 may be referred to as ground engaging tools. It should be appreciated that, in some embodiments, the wheels may be replaced by continuous tracks yet otherwise function in the same manner as described herein.

As additionally shown in Fig. 1, agricultural implement 112 may further include a first actuator 150 having a first cylinder and a second actuator 152 having a second cylinder. The agricultural machine 100 may include a controller 104, which is operatively coupled to various components of the agricultural machine 100, including the first actuator 150 and the second actuator 152. Controller 104 may be configured to send signals to the actuators 150, 152 causing their respective cylinders to extend or retract. In Fig. 1, the first actuator 150 is shown as being positioned between and coupled to the center section 120 of the frame 112 and the first wing section 122 of the frame 102. Likewise, the second actuator 150 is shown as being positioned between and coupled to the center section 120 of the frame 112 and the second wing section 124 of the frame 112. In some implementations, the actuators 150, 152 span across the fore and aft extending axes 136, 138, respectively. As the cylinders extend and retract, more or less force may be applied to the respective wing sections 122, 124 from the center section 120.

According to an example, controller 104 may acquire input data from various sources. The source may be machine inputs such as wheel speeds of vehicle 102, wheel speeds of implement 110, power output of vehicle 102 (e.g. power being delivered to the wheels), a machine-indicated speed, or the like. The inputs may also include external inputs such as, but not limited to, a GPS-derived speed, a radar indicated speed, image data from a computer vision system, or the like. Based on the input data, the controller 104 may identify conditions indicative of a mired event. For example, the controller 104 may determine whether the mired event is potentially forming, has a likelihood of forming, is imminent, or has occurred.

In response to the detection, controller 104 may generate control or action signals to various components or system to mitigate, resolve, or avert the mired event. One action, described above, utilizes the frame weight distribution system, including actuators 150, 152, to increase weight distribution to the wings. Other actions include signaling a central tire inflation system (CTIS) of the agricultural machine 100 (e.g. agricultural vehicle 102 or agricultural implement 110). Still further, controller 104 can signal the row units to increase or decrease downforce, or increase/decrease a depth of tillage points. Ground engaging features, such as row cleaners, rolling baskets, etc., may be raised to mitigate, avert, or recover from the mired event. More generally, a working position of ground engaging features may be changed (e.g. raised, lowered, folded, etc.). In some implementations, the agricultural implement 110 may include an implement propulsion system. In these implementations, the controller 104 may engage the implement propulsion system or increase an output of the system. In further implementations, all functions and/or activities of the agricultural machine 100 can be halted. An SOS alert can be transmitted to alert others (e.g. operator, remote monitoring system, etc.) of the situation.

In an example, the controller 104 may use a combination of the input data described above to determine conditions indicative of a mired event. In response, the controller 104 may output control signals to execute one or more of the mitigating actions above.

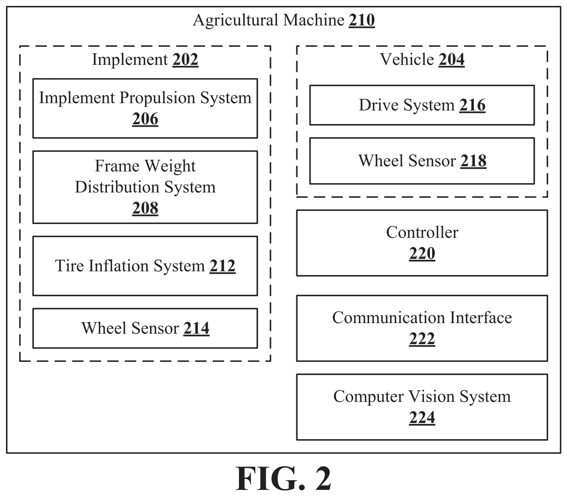

Turning now to Fig. 2, an exemplary, non-limiting implementation of an agricultural machine 210 is illustrated. The agricultural machine 210 may include an implement 202 and a vehicle 204 in some examples. As shown, machine 210 may include a controller 220 configured to detect conditions indicative of a mired event and output control signals to various components to mitigate, recover, or avert the mired event. The agricultural machine 210 may also include a communication interface 222 to communicatively couple the agricultural machine 210 to external systems such as GNSS, remote computing devices, external sensors, etc.

Controller 220 may acquire input data from various sources. In one example, controller 220 receives input data from wheel sensor 218 and/or wheel sensor 214. In one implementation, the wheel sensor 218 is associated with vehicle 204 (e.g. a tractor) and wheel sensor 214 is associated with implement 202 (e.g. a row planter). In an example, wheel sensors 214 and 218 output a wheel speed of the implement 202 and vehicle 204, respectively. Wheel sensors 214 and 218 may be, for example, rotary sensors or magnets on toners. Wheel sensors 214, 218 may provide wheel speed of the implement 202 and vehicle 204, respectively. In the alternative, the wheel speed of vehicle 204 may be derived from information from a drive system 216. For example, based on known information of the drive system 216 such as gear ratios, engine rpm, ground speed, etc., a wheel speed may be determined.

Controller 220 may utilize wheel speed to identify conditions indicative of a mired event. For example, controller 220 may determine a wheel slip value. Controller 220 may be configured with a predetermined threshold or an operator-provided threshold. The controller 220 may determine conditions indicative of the mired event when the wheel slip value exceeds the threshold. The wheel slip value may be associated with the agricultural vehicle 204 or the implement 202. In a further example, wheel slip values for both implement 202 and vehicle 204 may be determined. The two wheel slip values may be compared to detect the mired event.

Controller 220 may also utilize input data from drive system 216 to compare a power output of the drive system 216 to the wheel speed or wheel slip. For instance, with a determined power output (e.g. power output to the ground), a predictable wheel speed should occur. Deviations from this expectation may be indicative of a mired event. For instance, a relatively small output resulting in a high wheel spin could indicate a mired event.

In other detection scenarios, external input data may be acquired via communication interface 222. For example, input data from GNSS (e.g. GPS location and/or GPS-derived speed) may be acquired. In another example, a radar system may be deployed in the environment and controller 220 acquires a radar-indicated speed. Such externally-indicated speeds may be compared with a machine-indicated speed (from drive system 216, for example) to identify the mired event. The machine-indicated speed may be a wheel speed as described above, in some implementations.

In another implementation, machine 100 includes a computer vision system 224. Controller 220 may acquire image data from the computer vision system 224 and analyze the image data to detect the mired event. For example, the image data may be image data of regions around ground engaging elements of implement 202 or machine 100. In another example, the image data may include imaging of trailing portions of an agricultural field. Analysis of such image data may indicate conditions showing a potential of a mired event (e.g. deep ruts, soil buildup on leading portions of ground engaging elements, or the like). While shown as included on machine 100, it is to be appreciated that computer vision system 224 may be externally deployed. In such cases, controller 220 acquires image data from communications interface 222. Still further, controller 220 may acquire analysis results from computer vision system 224 in place of image data.

When controller 220 determines a mired event is imminent, occurring, or likely to occur, controller 220 outputs control signals to mitigate, recover, or avert the mired event. The controls signals may be sent to an implement propulsion system 206 of implement 202 to engage or increase output the propulsion system. In another example, control signals may be sent to a frame weight distribution system 208 to increase a weight distribution to wings of the implement 202. In some cases, the distribution may be increased to a maximum setting. Still further, the control signals may be sent to a tire inflation system 212 to change a tire pressure of wheels of implement 202 and/or vehicle 204. In yet another example, control signals may be sent to halt the machine 210 including all components or features of the implement 202 and vehicle 204. In this example, the complete stoppage of machine 210 prevents a situation from worsening. In addition, after halting, an SOS signal can be transmitted to an operator or other remote system to alert others of the mired event.

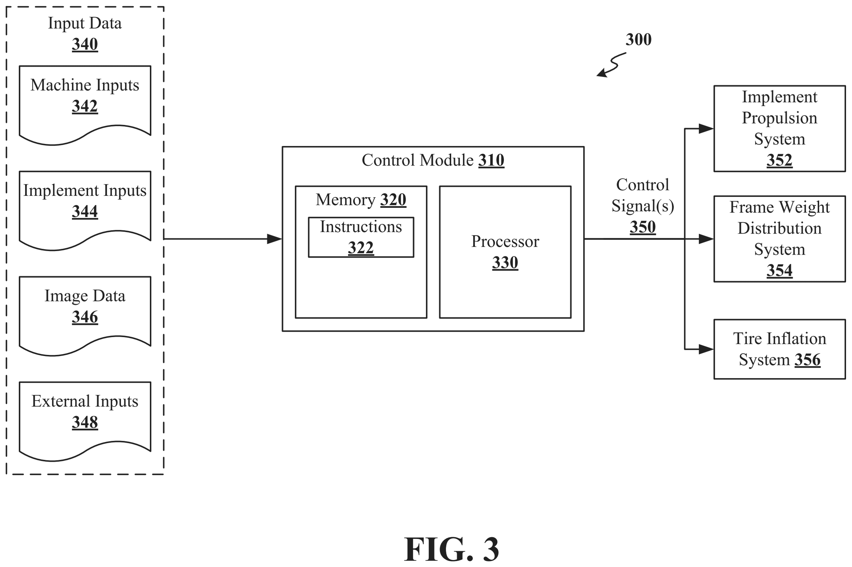

Turning to Fig. 3, an exemplary, non-limiting implementation of a control system 300 for an agricultural machine is depicted. Control system 300 may be implemented by controller 220 and/or controller 104 to implement the detection and mitigation techniques described herein. System 300 includes a control module 310, which may be a computing device. The detection and mitigation system described herein may be implemented by control module 310. As shown, control module 310 receives input data 340 and outputs control signals 350. Input data 340 may include machine inputs 342 (e.g. wheel speeds, drive system power outputs, etc.), implement inputs (e.g. implement wheel speeds, implement drive system output, etc.), image data 346 (e.g. from a computer vision system), and/or external inputs 348 (e.g. GPS-derived or radar indicated speed). Control signals 350 may be action signals or commands to various components such as an implement propulsion system 352, a frame weight distribution system 354, and/or a tire inflation system 356. Control signals 350 instruct the components to execute mitigation actions in response to a detected mired event.

Control module 310 includes a processor 330 configured to process data and instructions, and provide resulting data based on the processed data and instructions. The control module 310 further includes a memory 320 (e.g., computer memory, such as a device or system that is used to store information for use in a computer or related computer hardware and digital electronic devices, including short and long-term memory, temporary and permanent memory, and the like). Memory 320 stores executable instructions for a mired detection and mitigation system described herein. The instructions, when executed by processor 330, acquire input data 340 and generate control signals 350.

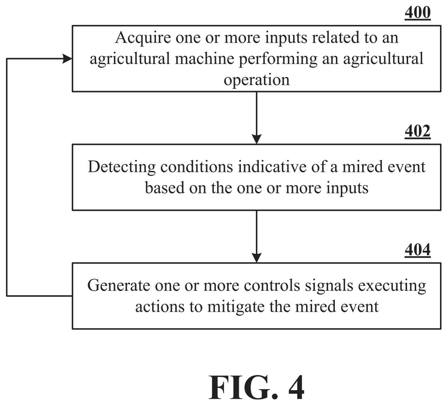

Turning to Fig. 4, various features and operations of the systems and techniques described herein are illustrated with an exemplary flowchart. The example in this figure is illustrative of some features of machine 100, machine 210, and/or control system 300, but are not exhaustive. Fig. 4 illustrates a flowchart of a method for detecting and mitigating a mired event during an agricultural operation. The method of Fig. 4, in some implementations, may be performed by machine 100, machine 210, and/or control system 300 and/or other computing device or controller associated with or in communication with machine 100, machine 210, and/or control system 300.

The method can begin at 400 wherein one or more inputs are acquired. The one or more inputs relate to an agricultural operation performed by an agricultural machine. The one or more inputs may be machine inputs (e.g. wheel speeds, power outputs, etc.), external inputs (e.g. externally-indicated speeds), image data or image analysis results from a computer vision system, or the like. At reference numeral 402, conditions indicative of a mired event are detected based on the one or more inputs. For example, as described above, discrepancies between a power output, externally-indicative speed, and/or wheel speeds may be identified. Such discrepancies above preconfigured limits may be indicative of imminent or high likelihood of a mired event. At 404, one or more control signals are generated. The one or more control signals execute actions to mitigate the mired event. As shown in Fig. 4, the method may return to reference 400 to acquire further input to confirm whether the mired event has been cleared or detect a subsequent mired event.

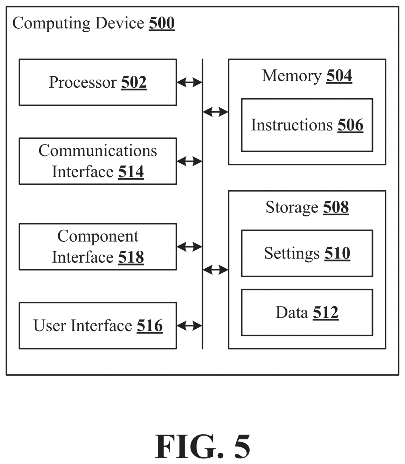

Turning to Fig. 5, illustrated is a schematic block diagram of an exemplary, non-limiting implementation for the computing device 500. Computing device 500 may be utilized to implement controller 104, controller 220, control module 310, or other controller of agricultural machine 100, 200. Computing device 500 includes a processor 502 configured to execute computer-executable instructions 506 such as instructions composing a mired event detection and mitigation system. Such computer-executable instructions 506 can be stored on one or more computer-readable media including non-transitory, computer-readable storage media such as memory 504. Memory 504 can also include other data (working data or variables) or portions thereof during execution of instructions 506 by processor 502.

The computing device 500 can also include storage 508 that can be, according to an embodiment, non-volatile storage to persistently store instructions 506, settings 510 and/or data 512.

The computing device 500 may also include a user interface 516 that comprises various elements to obtain user input and to convey user output. For instance, user interface 516 can comprise of a touch display, which operates as both an input device and an output device. In addition, user interface 516 can also include various buttons, switches, keys, etc. by which a user can input information to computing device 500; and other displays, LED indicators, etc. by which other information can be output to the user. Further still, user interface 516 can include input devices such as keyboards, pointing devices, and standalone displays.

The computing device 500 further includes a communications interface 514 to couple computing device 500, via a communications network, to various devices such as, but not limited to, other computing devices 500, other machines, other controllers, servers, or Internetenabled devices (e.g., IoT devices). Communication interface 514 can be a wired or wireless interface including, but not limited to, a WiFi interface, an Ethernet interface, a Bluetooth interface, a fiber optic interface, a cellular radio interface, a satellite interface, etc.

A component interface 518 is also provided to couple computing device 500 to various components. Component interface 518 can include a plurality of electrical connections on a circuit board or internal bus of computing device 500 that is further coupled to processor 502, memory 504, etc. Component interface 518, in another embodiment, can be an interface for a CAN bus of agricultural machines 100, 200. Further, the component interface 518 can implement various wired or wireless interfaces such as, but not limited to, a USB interface, a serial interface, a WiFi interface, a short-range RF interface (Bluetooth), an infrared interface, a near-field communication (NFC) interface, etc.

According to an aspect, a system for an agricultural machine is provided. The system includes at least one processor and a memory that stores instructions. The instructions, when executed by the at least one processor, configure the at least one processor to acquire input data related to the agricultural machine during an agricultural operation. The instructions further configure the at least one processor to determine, based on the input data, conditions indicative of a potential mired event. In addition, the instructions configure the at least one processor to generate a control signal to at least one component of the agricultural machine to mitigate the potential mired event.

In an example, the agricultural machine includes an agricultural vehicle and an agricultural implement. The agricultural implement includes a frame weight distribution system. The control signal is a signal to the frame weight distribution system to increase a weight distribution to outer portions of the agricultural implement. In a further example, the signal to the frame weight distribution system indicates a command to distribute weight to a maximum setting.

In a further example, the agricultural implement includes one or more row units and the control signal is a signal to the agricultural implement to change a downforce on the one or more row units or to change a depth of tillage points of the one or more row units. In a further example, the agricultural implement includes an implement propulsion system and the control signal is signal to the implement propulsion system to one of engage or increase speed.

In another example, the agricultural machine includes a central tire inflation system, and wherein the control signal is a signal to the central tire inflation system to change a tire pressure. In another example, the control signal is a signal to change a working position of ground engaging features of the agricultural machine.

In an example, the input data relates to a drive system of the agricultural machine, and wherein the processor is further configured to determine a wheel slip value. For example, at least a potential for the mired event is determined when the wheel slip value exceeds a threshold.

In another example, the input data includes a machine-indicated speed of the agricultural machine and at least one of location data or an externally-indicated speed of the agricultural machine and the conditions indicative of the potential mired event are determined based on a comparison of the machine-indicated speed and the at least one of the location or externally-indicated speed. In another example, the input data includes an implement wheel speed and the processor is further configured to determine a wheel slip value for the agricultural implement, and wherein conditions indicative of the potential mired event are determined based on the wheel slip value. In an example, the input data further includes a vehicle wheel speed and the conditions indicative of the potential mired event are determined based on a comparison between the vehicle wheel speed and the implement wheel speed.

In another example, the input data includes image data from a vision system and the conditions indicative of the potential mired event are determined based on the image data. In another example, the input data includes a power output of the agricultural machine and a wheel speed of the agricultural machine and the conditions indicative of the potential mired event are determined based on a comparison of the power output to the wheel speed.

In another aspect, a method for avoiding a mired event in an agricultural machine is provided. The method includes acquiring, by at least one processor, input data related to the agricultural machine while performing an agricultural operation. The method also includes detecting, based on the input data, conditions indicative of a potential mired event. In addition, the method includes generating a control signal to a component of the agricultural machine to mitigate the potential mired event when the conditions indicative of the potential mired event are detected. In an example, the input data includes one or more of a vehicle wheel speed, an implement wheel speed, global navigation satellite system (GNSS) derived location or speed, radar-indicated speed, a vehicle power output, or image data from a vision system. In another example, detecting the conditions indicative of the potential mired event comprises determining the conditions based on one or more of a wheel slip value, a comparison between a machine-indicated speed and an externally-indicated speed, an analysis of image data, or a comparison of power output to vehicle speed. In another example, the control signal indicates one or more actions. The one or more actions include at least one of: an increase of a weight distribution to outer portions of an agricultural implement using a frame distribution system; a change in tire pressure; changing a working position of ground engaging features; a change to a downforce of the agricultural implement; a depth change; an engagement of an implement propulsion system; a speed increase of the implement propulsion system; or a halting of all functions of the agricultural machine and sending an alert.

According to yet another aspect, a system is provided. The system includes an agricultural vehicle and an agricultural implement coupled to the agricultural vehicle to perform an agricultural operation. The system includes a controller associated with at least one of the agricultural vehicle or the agricultural implement that receives input data and outputs control signals to control the agricultural machine or the agricultural implement. The controller includes at least one processor and a memory that stores instructions. The instructions, when executed by the at least one processor, configure the at least one processor to identify conditions indicative of a potential mired event based on the input data, wherein the input data includes one or more of a wheel speed of the agricultural vehicle, a wheel speed of the agricultural implement, an externally-indicated speed, a power output of the agricultural vehicle, or image data from a computer vision system. The instructions further configure the processor to generate control signals indicative of an action to mitigate the potential mired event, wherein the action includes one or more of changing a tire pressure on the agricultural implement, changing a weight distribution of the agricultural implement with a frame weight distribution system, changing a downforce on row units of the agricultural implement, changing depth of tillage points of the agricultural implement, changing a working position of ground engaging features of the agricultural implement, engage or increase speed of the agricultural implement via an implement propulsion system, or halt all activity and send an alert.

## Claims

1. Agricultural machine (210), comprising:
an agricultural vehicle (204) and an agricultural implement (202);
at least one processor (330); and
a memory (320) that stores instructions (322) that, when executed by the at least one processor (330), configure the at least one processor (330) to:
acquire input data (340) related to the agricultural machine (210) during an agricultural operation;
determine, based on the input data, conditions indicative of a potential mired event; and
generate a control signal (350) to at least one component of the agricultural machine (210) to mitigate the potential mired event.

2. The agricultural machine (210) of claim 1, wherein the agricultural implement (202) includes a frame weight distribution system (208),
wherein the control signal (350) is a signal to the frame weight distribution system (208) to increase a weight distribution to outer portions of the agricultural implement (202).

3. The agricultural machine (210) of claim 1 or 2, wherein the agricultural machine (210) includes a central tire inflation system (212), and wherein the control signal is a signal to the central tire inflation system (212) to change a tire pressure.

4. The agricultural machine (210) of one of the claims 1 to 3, wherein the control signal (350) is a signal to change a working position of ground engaging features of the agricultural machine (210).

5. The agricultural machine (210) of one of the claims 1 to 4, wherein the agricultural implement (202) includes one or more row units, and wherein the control signal (350) is a signal to the agricultural implement (202) to change a downforce on the one or more row units or to change a depth of tillage points of the one or more row units.

6. The agricultural machine (210) of one of the claims 1 to 5, wherein the agricultural implement (202) includes an implement propulsion system (206), and wherein the control signal (350) is signal to the implement propulsion system (206) to one of engage or increase speed.

7. The agricultural machine (210) of one of the claims 1 to 6, wherein the input data (340) relates to a drive system (216) of the agricultural machine (210), and wherein the processor is further configured to determine a wheel slip value,
wherein at least a potential for the mired event is determined when the wheel slip value exceeds a threshold.

8. The agricultural machine (210) of one of the claims 1 to 7, wherein the input data (340) includes a machine-indicated speed (242) of the agricultural machine (210) and at least one of location data or an externally-indicated speed (348) of the agricultural machine (210), and
wherein the conditions indicative of the potential mired event are determined based on a comparison of the machine-indicated speed (242) and the at least one of the location or externally-indicated speed (348).

9. The agricultural machine (210) of one of the claims 1 to 8, wherein the input data (340) includes an implement wheel speed (344), wherein the processor is further configured to determine a wheel slip value for the agricultural implement (202), and wherein conditions indicative of the potential mired event are determined based on the wheel slip value.

10. The agricultural machine (210) of claim 9, wherein the input data (340) further includes a vehicle wheel speed (342), and wherein conditions indicative of the potential mired event are determined based on a comparison between the vehicle wheel speed (342) and the implement wheel speed (344).

11. The agricultural machine (210) of one of the claims 1 to 10, wherein the input data (340) includes image data (346) from a vision system (224), and wherein conditions indicative of the potential mired event are determined based on the image data (346).

12. The agricultural machine (210) of one of the claims 1 to 11, wherein the input data (340) includes a power output (342) of the agricultural machine (210) and a wheel speed (342) of the agricultural machine (210), and wherein the conditions indicative of the potential mired event are determined based on a comparison of the power output to the wheel speed.

13. A method for avoiding a mired event in an agricultural machine (210), comprising
an agricultural machine (210) according to one of the claims 1 to 12; the method further comprising:
acquiring (400), by at least one processor, input data related to the agricultural machine (210) while performing an agricultural operation;
detecting (402), based on the input data, conditions indicative of a potential mired event; and
generating (404) a control signal to a component of the agricultural machine (210) to mitigate the potential mired event when the conditions indicative of the potential mired event are detected.

14. The method of claim 13, wherein the input data includes one or more of:
a vehicle wheel speed;
an implement wheel speed;
global navigation satellite system (GNSS) derived location or speed;
radar-indicated speed;
a vehicle power output; or
image data from a vision system;
wherein detecting the conditions indicative of the potential mired event comprises determining the conditions based on one or more of:
a wheel slip value;
a comparison between a machine-indicated speed and an externally-indicated speed;
an analysis of image data; or
a comparison of power output to vehicle speed; and
wherein the control signal indicates one or more actions, the one or more actions include at least one of:
an increase of a weight distribution to outer portions of an agricultural implement using a frame distribution system;
a change in tire pressure;
changing a working position of ground engaging features;
a change to a downforce of the agricultural implement;
a depth change;
an engagement of an implement propulsion system;
a speed increase of the implement propulsion system; or
a halting of all functions of the agricultural machine (210) and sending an alert.
